# EUROPEAN PATENT APPLICATION

(11) **EP 1 798 678 A1**
(43) Date of publication of application: **20.06.2007**
(21) Application number: 05292715.9
(22) Date of filing: 15.12.2005
(51) Int. Cl.: G06Q 10/00, H04L 12/58, G06F 17/27, G06F 21/00

(54) **Method and system for automatically controlling forum posting**

(71) Applicant: SAP AG, 69190 Walldorf (DE)
(72) Inventor: Ulmer, Cedric, 06000 Nice (FR); Gomez, Laurent, 178, Rue St. Saint Sauveur, 06110 Le Cannet (FR); Hebert, Cedric, 06250 Mougins (FR); Spadone, Pascal, 06600 Antibes (FR)
(74) Representative: Lehmann, Judith Christina

(57) **Abstract**

The present invention refers to a method for automatically controlling a data submission in a forum, the control being based on the respective data content, the method comprising:
- the data content submitted by a user for the forum is automatically parsed with respect to specifically selected characters, the selected characters being provided together with respective selection ancillary information,
- if any selected character is found within the data content, the respective selection ancillary information is analyzed,
- the data is handled conformable with the analyzed respective selection ancillary information,
- an answer for the user is elaborated, the answer including the respective found character together with an appropriate analysis of its selection ancillary information and informing the user about the manner the data is handled, and
- the elaborated answer is communicated to the user.

The present invention further refers to a system and a checker module for automatic control of a data submission in a forum.

## Description

### Field of the Invention

The present invention refers to a method and a system for automatically controlling a data submission in a forum, particularly in a web forum. Particularly, the present invention relates to a method and a system for automatically controlling a data submission in a forum, the control being based on the respective data content. Furthermore, the present invention refers to a checker module employable for an automatic control of a data submission in such a forum. The present invention also refers to a computer program product, a computer program and a computer-readable medium.

### Background of the Invention

Companies often provide technical forums, open to public, where its developers can contribute to help a forum community. Company internal employees are encouraged to participate to such forums, so as to increase the usefulness of such places. Still, since people outside the company can although access the forums, such as external developers or competitors, critical and sensitive information such as future architectures must not be revealed in these forums. Yet it is hard and resource consuming to control what employees of the company communicate on such open forums. The bigger the company becomes, the harder it is to manually control the submitted data content. Sensitive data content that should not be disclosed can be for example a new product name or a new technology under development.

It is known from the prior art to use automatic moderators for forums that control posting based on a simple file listening forbidden keywords. For instance, the so-called phpBB2 has a moderator based on keywords, and allows for defining a replacement text that is displayed instead of the respective forbidden keyword. Furthermore, newsgroups use for example so-called spamdexing algorithms in order to avoid spam in their news. Such anti-spams systems for newsgroups propose algorithms for detecting spam postings, generally based, for instance, on words occurrences in a posting.

Therefore, current automatic control systems, can check for a list of forbidden words and block messages containing such "dirty" words, but without giving further explanation. The issue comes from the fact, that the current systems have been developed in order to achieve a simple Boolean statement. That means, that either a word is blocked because it is a "bad" word or the word is allowed. Generally, this is not directly applicable to companies, which often require controlling the use of specifically selected words by the employees but do not necessarily want to prevent them from using those words.

### Summary of the Invention

Therefore, it would be desirable to have a system and a method by means of which employees can be informed about further ancillary selection information such as the sensitivity of selected characters until when those characters will be sensitive and a rationale behind it.

The present invention proposes a method for automatically controlling a data submission in a forum with the features of claim 1, a system for an automatic control of a data submission in a forum with the features of claim 10, a checker module with the features of claim 17 and an appropriate computer program product with the features of claim 21, a computer program with the features of claim 22 and a computer-readable medium with the features of claim 23. Further embodiments are disclosed by corresponding subclaims.

According to claim 1 of the present invention, a method for automatically controlling a data submission in a forum is provided, the control being based on the respective data content. The method comprises the following steps:
- the data content submitted by a user for the forum is automatically parsed with respect to specifically selected characters, the selected characters being provided with respective selection ancillary information,
- if any selected character is found within the data content, the respective selection ancillary information is analyzed,
- the data is handled conformable with the analyzed respective selection ancillary information
- an answer for the user is elaborated, the answer including the respective found character together with an appropriate analysis of its selection ancillary information and informing the user about the manner the data is handled, and
- the elaborated answer is communicated to the user.

It is possible that the elaborated answer is sent as a message to the user, e.g. via e-mail. Generally, each communication channel which allows a sufficient confidential data exchange can be used here.

It is possible, that the selected characters are stored together with the respective selection ancillary information in a policies base.

It is possible that the characters are dynamically selected. That means that the selection of those characters which are to be handled with care can dynamically be adapted to actual requirements. In case that a company works on a new technology, for example there are several words which should be avoided or at least handled with care during the development phase of that technology. During this phase those words would be selected as selected characters.

By means of the proposed method, data submission of users in a forum, particularly in a web forum can be automatically controlled and a warning in form of an answer can be sent back to the user regarding potential forbidden disclosures. Such an elaborated answer can also warn a user regarding the way he should present information. The answer can contain any recommendations to the user that submits the content.

According to a further embodiment of the present invention, the selected characters are words, which are to be used with care, particularly in some specific environment. The specific environment can be defined by and based on a current company's strategy for example. As already mentioned, companies provide technical forums, open to public, where its developers can contribute to help a forum community. Since people outside the company can also access the forum sensitive information such as future architectures must not be revealed in this forum. By means of the proposed method data content that may be inadvertently submitted in the forum can be automatically controlled and the user can be provided with an adequate informative elaborated answer such that the user is informed how to handle such character or word in future. The method establishes a possibility to inform users about handling guidelines how to use characters in data submissions in a forum. Therefore, the use of words by employees of a company can be automatically controlled instructing simultaneously the employees how to use those words in future.

The method according to the present invention is thus more sophisticated than a simple file listening keywords, as it is known from the cited prior art. Each selected character is associated with respective selection ancillary information containing for example information why this character is a selected character. Contrary to a forum automatic moderator as it is known from the prior art, the method according to the present invention allows for sending information back to the user who can then modify his message accordingly.

According to a further embodiment of the method according to the present invention a data content is parsed character per character, each character being controlled individually whether it is a selected character.

It is also possible according to the present invention that the respective selection ancillary information comprises an expiry date until the corresponding character should be considered with care.

In a further embodiment of the method according to the present invention the respective selection ancillary information comprises a handling classification indicating how the corresponding character is to be used. It is possible that each of the selected characters is associated with a priority according to a predefined ranking. Thus, it is possible for example that the priority of "1" means that the character must not be disclosed to the public, but only to internal users or employees. Priority of "2" can mean that the character can be disclosed to trusted partners of the corresponding company and to internal employees, but not to the general public. The priority of "3" can mean that the character can be disclosed to the general public, but must be used with care.

According to a further embodiment of the method according to the present invention the respective selection ancillary information comprises a rationale explaining why the corresponding character is a selected character. Such an explanation part can describe for example in more detail why the corresponding character is associated with a specific priority. Furthermore, such an explanation part can describe how to handle data content containing the corresponding character. By means of such an explanation part the user is informed about what he has to take into account when employing the corresponding character. The employees of a company are thus sensitized for the use of the corresponding character when posting a data submission in a specific forum, particularly in a web forum.

According to a further embodiment of the method according to the present invention the selected characters are stored and presentable together with the respective selection ancillary information in table form. Such a table comprising all selected characters defined for a certain company can be stored in an appropriate policies base.

The present invention also refers to a system for automatic control of a data submission in a forum, particularly in a web forum, the control being based on the respective data content. The system comprises a policies base in which specifically selected characters including selection ancillary information associated with the respective characters can be stored, a checker module connected with the policies base which is configured to parse the data content submitted by a user for the forum with respect to the specifically selected characters stored in the policies base, to analyze the respective selection ancillary information in case that any selected character is found in the data content, to induce a handling of the data conformable with the analyzed ancillary information and to elaborate an answer for the user, the answer including the respective found character together with an appropriate analysis of its selection ancillary information and informing the user about the manner the data is handled, and a forum management unit adapted to serve as communication link between the user and the checker module.

In a possible embodiment of the system according to the present invention the forum management unit is configured to receive the data, to forward the data to the checker module and to send an answer elaborated by the checker module to the user as necessary.

It is also possible that the ancillary information comprises metadata and a textual comment associated with the respective character. The metadata can comprise for example an expiry date until the corresponding character should be considered with care and/or a handling classification indicating how the corresponding character is to be used. Such a handling classification can correspond to a priority ranking of the corresponding selected character.

Due to such an elaborated answer, a user can easily know why specific characters, particularly specific words are rejected or which specific care a user should have when using those specific selected characters, particularly specific selected words.

It is possible that the textual comment comprises a rationale explaining why the corresponding character is a selected character.

In the environment of a company for example characters or words describing a new technology can be critical for the company and should be disclosed only to internal persons. Those characters would be associated for example with a priority of "1". Other characters should be used only with trusted partners or internal persons, in order to avoid that competitors may reuse information given by such a character to gain advantage against the corresponding company. In such a case the priority of the character would be for example "2". Finally, a character should be considered as important and therefore not be downgraded in its value when being part of a discussion on an appropriate forum. In such a case the character would be associated with a priority of "3".

According to a further embodiment of the system according to the present invention the system further comprises a web client tool allowing a user as for example an employee of a certain company for submitting data content.

It is also possible that the forum management unit is realized as a web server side application for managing and displaying data content.

The present invention also refers to a checker module for automatic control of a data submission in a forum, particularly in a web forum, the control being based on the respective data content, the checker module being in contact with a policies base in which specifically selected characters including selection ancillary information associated with the respective characters can be stored. The checker module according to the present invention is configured to
- parse the data content submitted by a user in the forum with respect to the specifically selected characters stored in the policies base,
- analyze the respective selection ancillary information in case that any selected character is found in the data content,
- induce a handling of the data conformable with a analyzed ancillary information and
- elaborate an answer for the user, the answer including the respective found character together with an appropriate analysis of its selection ancillary information and informing the user about the manner the data is handled.

It is possible that the checker module is connectable with the forum management unit such that the data received by the forum management unit can be forwarded to the checker module and an answer elaborated by the checker module can be sent to the user via the forum management unit. That means that the forum management unit acts as a communication link between a user and the checker module.

According to another possible embodiment of the checker module according to the present invention the checker module includes the policies base. That means that the policies base forms a part of the checker module.

It is also possible that the checker module can be part of a system according to the present invention and/or be employed for carrying out a method according to the present invention.

The present invention also refers to a computer program product with a computer-readable medium and a computer program stored on the computer-readable medium with a program code which is suitable for carrying out a method according to the present invention when the computer program is run on a computer.

The present invention also deals with a computer program with a program code which is suitable for carrying out a method according to the present invention when the computer program is run on a computer.

The present invention also relates to a computer-readable medium with a computer program stored thereon, the computer program comprising a program code which is suitable for carrying out a method according to the present invention when the computer program is run on a computer.

Further features and embodiments of the invention become apparent from the description and the accompanying drawings.

It will be understood that the features mentioned above and those described hereinafter can be used not only in the combination specified but also in other combinations or on their own without departing from the scope of the present invention.

The invention is schematically illustrated in the drawings by way of an example embodiment and is explained in detail with reference to the drawings. It is to be understood that the description is in no way limiting of the scope of the present invention and is merely an illustration of a preferred embodiment of the invention.

### Brief description of the Drawings

In the drawings,
Figure 1 is a schematic view of a possible embodiment of a system according to the present invention;
Figure 2 shows a flowchart describing a possible embodiment of a method according to the present invention;
Figure 3 shows a table containing selected words together with respective ancillary information as it can be provided by an embodiment of a system according to the present invention; and
Figure 4 shows a sequence diagram describing another possible embodiment of a method according to the present invention.

### Detailed Description of the Drawings

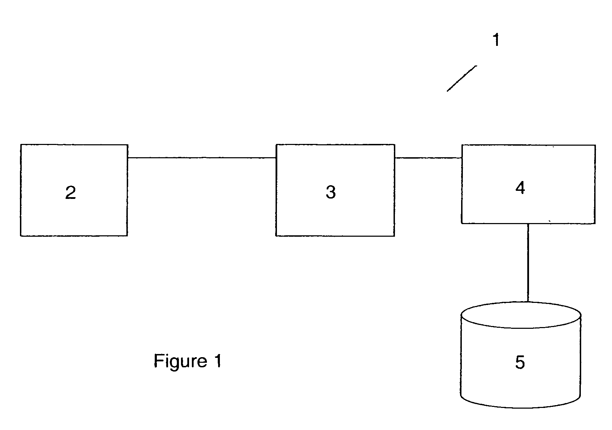

Figure 1 shows a system 1 comprising a client tool 2, a server side application, namely a forum management unit 3, a checker module 4 and a policies base 5. The client tool 2 can be designed as a web client tool configured to submit data content in a web forum as standard web forums propose. Any kind of client tool which can be used for submitting data content in a specific forum can be used. The server side application 3 can also be a web server side application as standard web forums propose. Any kind of server side application 3 can, however, also be used which is configured to manage and display data content submitted by a user for example via an appropriate client tool. The checker module 4 provides a list of specifically selected characters, as for example sensitive keywords such as insults. Each selected character is associated with further selection ancillary information, such as for example an expiry date, a priority value and an explanation part. The expiry date corresponds to the date until the specific selected character must not be disclosed to the public or should be considered with care. The priority value can indicate how a selected character has to be used. The priority value of "1" can mean, for example, that the corresponding character must not be disclosed to the public, but only to internal employees of a corresponding company. The priority value of "2" can mean that the corresponding character can be disclosed to trusted partners of the corresponding company and to internal employees, but not to the general public. The priority value of "3" can mean that the corresponding character can be disclosed to the general public, but must be used with care. The explanation part can thus describe the assignment of the priority values to respective selected characters in more detail. The explanation part can therefore give explanation about why a selected character is a selected character and has to be handled with care. When data content is submitted by a user in the forum the forum management unit 3 requests the checker module 4 to parse the data content with respect to the specifically selected characters. The specifically selected characters are stored together with their corresponding ancillary information in the policies base 5. The selected characters which have to be handled with care are stored in the policies base 5 including metadata such as an appropriate priority value and an expiry date and a textual comment explaining why this character is to be handled with care.

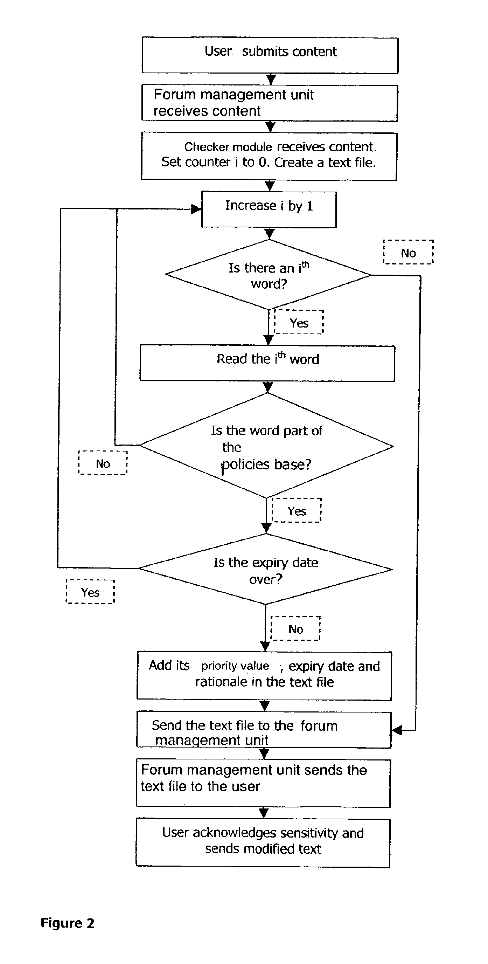

Figure 2 shows schematically a generic flowchart of an embodiment of the method according to the present invention. In step 1 a user, as for example an employee of a specific company submits a data content for a specific forum. This data submission can have the following data content: "I think the incoming XY architecture in our next version will enhance our performance." In step 2 the data content is received by a forum management unit which acts as a communication link between the user and a subsequent checker module and forwards the data content to the corresponding checker module.

In step 3 the checker module parses the data content and looks for selected characters, generally for "bad" words, in its policies base. That means that the checker module is in contact with a policies base which in turn acts as storage for the selected characters. The checker module parses the data content character by character, that means normally word by word. It can set a counter from 0 to i. Each word is read one after the other and the checker module controls whether the word is part of the list stored within the policies base. If the word is a "bad" word as for example "XY" the checker module looks for an expiry date, i.e. the date until the specific word must not be disclosed to the public or should be considered with care. If the expiry date is already reached, the checker module increases the counter i by 1. If there is an i^{th} word, then the same procedure as described for the foregoing word is performed for the i^{th} word as indicated by the respective arrows. If the expiry date is not reached yet the checker module looks for a priority value of the found word. The priority value of "1" can mean that the found word must not be disclosed to the public, but only to internal employees of the company. The priority value of "2" can mean that the word can be disclosed to trusted partners of the company and to internal employees but not to the general public. The priority value of "3" can mean that the word can be disclosed to the general public, but must be used with care. The checker module creates a text file including the priority value of the found word, the expiry date and a rationale why the found word is defined as a selected word. After having controlled the whole data content word by word the checker module elaborates an answer in form of a text file for the employee writing a summary of the found selected words and including an explanation part. The explanation part summarizes why the found selected words are defined as selected words and how they have to be handled. Thanks to this the employee will easily know why some words have been rejected or which specific care the employee should have when using those specific words. The checker module sends the elaborated answer to the forum management unit which forwards the text file to the user. By means of the text file the user acknowledges sensitivity of the selected words he previously used and probably sends a modified text. It is also possible that the checker module creates for each selected word which has been found in the data content a separate text file. Each of such text file can then be sent separately to the user.

In contrast to the described modus operandi of the checker module a moderator as provided according to the prior art would also parse a new data submission and looks for "bad" words in an appropriate keywords list. If a "bad" word would be found the data submission is rejected and a message is created for the corresponding employee. Current systems are, however, only using a simple file listing forbidden words with no more explanation. That issue comes from the fact that these systems have been developed in order to achieve a simple Boolean statement. That means that either a word is blocked because it is a "dirty" word or the word is allowed. Such a moderator would, however, not provide any information about an expiry date until a specific selected word must not be disclosed to the public or should be considered with care, or any priority value indicating how the selected word has to be considered with respect to companies internals. Furthermore, a moderator according to the prior art would also give no further explanation about why the selected word is a so-called "dirty" word. The user would get only the information that he has used a word which is forbidden wherefore his message got rejected. However, the user will get no hint for the future so that he can take care in the future not to use that word or to use that word with care. The moderator of the prior art is not configured to sensitise a user for handling predefined characters or words. Furthermore, there is no differentiation in the handling of selected words. Either a word is blocked or a word is allowed. The checker module according to the present invention, however, can inform an employee about the sensitivity of words, until those words will be sensitive and the rationale behind it. Thus, the use of words by users can be dynamically controlled without necessarily prevent users from using those words.

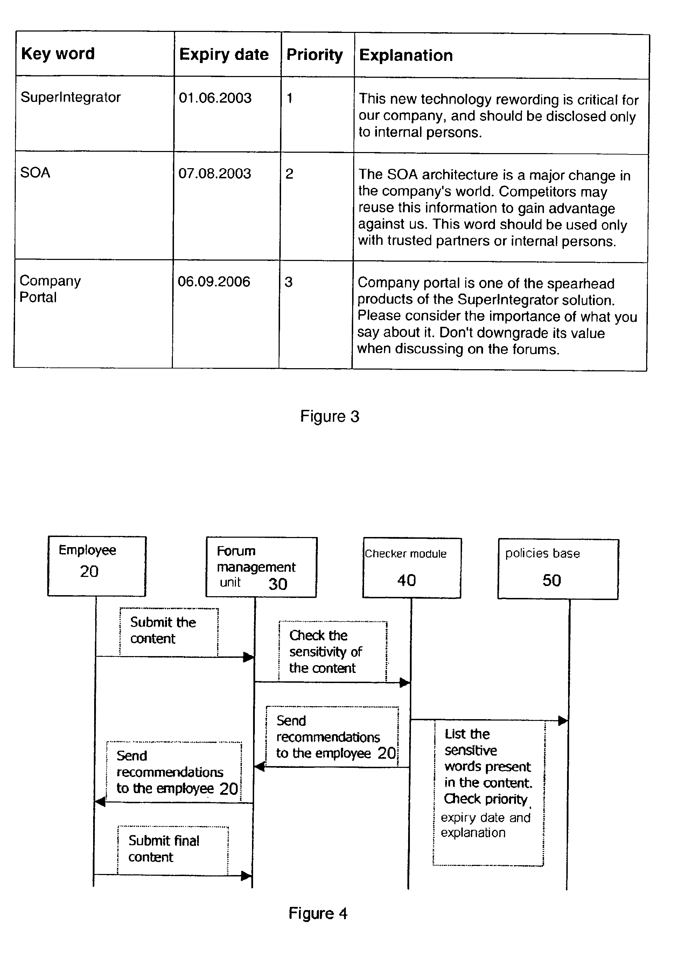

Figure 3 shows a table as it can be stored within a policies base and which contains selected words together with respective selection ancillary information. In the left column of the table the selected words are listed as keywords. In column 2 an expiry date is recorded until the specific keyword must not be disclosed to the public or should be considered with care. In column 3 the priority value assigned to the respective keyword is enlisted. In the right column an explanation is given in text form explaining why the corresponding keyword is associated with the respective priority value and why this keyword is defined as a selected word, namely a keyword.

In the example shown, the first keyword is "SuperIntegrator". The expiry date of this keyword is the 01 June 2003. The priority value of "1" is assigned to that keyword. The explanation says that the keyword "SuperIntegrator" describes a new technology whose rewording in that form is critical for the company and should be disclosed only to internal persons. That means that whenever that keyword is used in a data submission on a forum that data submission would be rejected and an information would be given to the user which has submitted that data content so that the user can send a new data content with respect to the explanation given to him. A further keyword is "SOA" whose expiry date is 07 August 2003. The priority value assigned to that keyword is "2". The explanation about why that keyword is a selected word says that the SOA architecture is a major change in the company's word. Competitors may reuse this information to gain advantage against that company. This word should be used only with trusted partners or internal persons. The third keyword which is listed in the table shown in figure 3 is the word "Company Portal". The expiry date for this keyword is 06 September 2006. The priority value assigned to that keyword is "3". The explanation of this priority value is that the Company Portal is one of the spearhead products of the SuperIntegrator solution. The user is requested to consider the importance of what he says about this solution. He should take care not to downgrade the value of this solution when discussing it on the forums.

Figure 4 shows a sequence diagram describing a possible embodiment of the method according to the present invention. An employee 20 submits a data content for a forum which is received by a forum management unit 30. The forum management unit 30 forwards the data content to a checker module 40. The checker module 40 parses the new data submission and looks for selected characters which are generally "bad" words. Therefore, the checker module 40 reads word by word and looks for each word whether it can be found in a policies base 50. The policies base 50 acting as storage contains all specifically selected characters together with respective selection ancillary information. If the checker module 40 finds within the data content one of the selected characters, those characters are listed in a text file for example. Furthermore, the checker module 40 analyzes the respective ancillary information of the found characters, as for example a priority of the respective character, an expiry date and a rationale why the respective character is a selected character. The analysis of the respective ancillary information is appropriately edited such that the checker module 40 can elaborate an answer for the employee 20 by writing a summary of the found selected characters and including an explanation part. This explanation part can involve recommendations and further information useful for the employee for that he will easily know why some words have been rejected or which specific care he should have when using specific words. This elaborated answer is sent by the checker module 40 to the forum management unit 30. The forum management unit 30 forwards this elaborated answer to the employee 20. The employee 20 has now the occasion after having read the recommendations involved within the elaborated answer of the checker module 40 to submit a new data content.

## Claims

1. A method for automatically controlling a data submission in a forum, the control being based on the respective data content, the method comprising:
- the data content submitted by a user (2, 20) for the forum is automatically parsed with respect to specifically selected characters, the selected characters being provided together with respective selection ancillary information,
- if any selected character is found within the data content, the respective selection ancillary information is analyzed,
- the data is handled conformable with the analyzed respective selection ancillary information,
- an answer for the user (2, 20) is elaborated, the answer including the respective found character together with an appropriate analysis of its selection ancillary information and informing the user (2, 20) about the manner the data is handled, and
- the elaborated answer is communicated to the user (2, 20).

2. The method according to claim 1, wherein the selected characters are stored together with the respective selection ancillary information in a policies base (5, 50).

3. The method according to claim 1 or 2, wherein the selected characters are selected dynamically.

4. The method according to claim 1, 2 or 3, wherein the selected characters are words which are to be used with care in some specific environment.

5. The method according to any one of claims 1 to 4, wherein the data content is parsed character by character, each character being controlled individually whether it is a selected character.

6. The method according to any one of the preceding claims, wherein the respective selection ancillary information comprises an expiry date until the corresponding character should be considered with care.

7. The method according to any one of the preceding claims, wherein the respective selection ancillary information comprises a handling classification indicating how the corresponding character is to be used.

8. The method according to any one of the preceding claims, wherein the respective selection ancillary information comprises a rationale explaining why the corresponding character is a selected character.

9. The method according to any one of the preceding claims, wherein the selected characters are stored and presentable together with the respective selection ancillary information in table form.

10. The method according to any one of the preceding claims, wherein the elaborated answer is automatically sent to the user (2, 20).

11. A system for an automatic control of a data submission in a forum, the control being based on the respective data content, the system comprising:
- a policies (5, 50) base in which specifically selected characters including selection ancillary information associated with the respective characters can be stored,
- a checker module (4, 40) connected with the policies base (5, 50) which is configured to parse the data content submitted by a user (2, 20) for the forum with respect to the specifically selected characters stored in the policies base (5, 50), to analyze the respective selection ancillary information in case that a selected character is found in the data content, to induce a handling of the data conformable with the analyzed ancillary information and to elaborate an answer for the user (2, 20), the answer including the respective found character together with an appropriate analysis of its selection ancillary information and informing the user (2, 20) about the manner the data is handled, and
- a forum management unit (3, 30) adapted to serve as communication link between the user (2, 20) and the checker module (4, 40).

12. The system according to claim 11, wherein the forum management unit (3, 30) is configured to receive the data, to forward the data to the checker module (4, 40) and to send an answer elaborated by the checker module (4, 40) to the user (2, 20) as necessary.

13. The system according to claim 11 or 12, wherein the ancillary information comprises metadata and a textual comment associated with the respective character.

14. The system according to claim 13, wherein the metadata comprises an expiry date until the corresponding character should be considered with care and/or a handling classification indicating how the corresponding character is to be used.

15. The system according to claim 13 or 14, wherein the textual comment comprises a rationale explaining why the corresponding character is a selected character.

16. The system according to any one of claims 11 to 15, further comprising a web client tool for submitting data content.

17. The system according to any one of claims 11 to 16, wherein the forum management unit (3, 30) is realized as a web server side application for managing and displaying data content.

18. A checker module for automatic control of a data submission in a forum, the control being based on the respective data content, the checker module (4, 40) being in contact with a policies base (5, 50) in which specifically selected characters including selection ancillary information associated with the respective characters can be stored, the checker module is configured
- to parse the data content submitted by a user (2, 20) for the forum with respect to the specifically selected characters stored in the policies base (5, 50),
- to analyze the respective selection ancillary information in case that a selected character is found in the data content,
- to induce a handling of the data conformable with the analyzed ancillary information and
- to elaborate an answer for the user (2, 20), the answer including the respective found character together with an appropriate analysis of its selection ancillary information and informing the user (2, 20) about the manner the data is handled.

19. The checker module according to claim 18, wherein the checker module (4, 40) is connectable with a forum management unit (3, 30) such that data received by the forum management unit (3, 30) can be forwarded to the checker module (4, 40) and an answer elaborated by the checker module (4, 40) can be sent to the user (2, 20) via the forum management unit (3, 30).

20. The checker module according to claim 18 or 19, wherein the checker module includes the policies base (5, 50).

21. The checker module according to any one of claims 18 to 20, wherein the checker module (4, 40) can be part of a system according to any one of claims 11 to 17 and/or be employed for carrying out a method according to any one of claims 1 to 10.

22. A computer program product with a computer-readable medium and a computer program stored on the computer-readable medium with a program code which is suitable for carrying out a method according to any one of claims 1 to 10 when the computer program is run on a computer.

23. A computer program with a program code which is suitable for carrying out a method according to any one of claims 1 to 10 when the computer program is run on a computer.

24. A computer-readable medium with a computer program stored thereon, the computer program comprising a program code which is suitable for carrying out a method according to any one of claims 1 to 10 when the computer program is run on a computer.

## Amended claims

### Amended claims in accordance with Rule 86(2) EPC.

**1.** A computer-implemented method for automatically controlling a data submission in a forum, the control being based on the respective data content, the method comprising:
- the data content submitted by a user (2, 20) for the forum is automatically parsed with respect to specifically selected characters, the selected characters being provided together with respective selection ancillary information,
- if any selected character is found within the data content, the respective selection ancillary information is analyzed,
- the data is handled conformable with the analyzed respective selection ancillary information,
- an answer for the user (2, 20) is elaborated, the answer including the respective found character together with an appropriate analysis of its selection ancillary information and informing the user (2, 20) about the manner the data is handled, and
- the elaborated answer is communicated to the user (2, 20).

**2.** The method according to claim 1, wherein the selected characters are stored together with the respective selection ancillary information in a policies base (5, 50).

**3.** The method according to claim 1 or 2, wherein the selected characters are selected dynamically.

**4.** The method according to claim 1, 2 or 3, wherein the selected characters are words which are to be used with care in some specific environment.

**5.** The method according to any one of claims 1 to 4, wherein the data content is parsed character by character, each character being controlled individually whether it is a selected character.

**6.** The method according to any one of the preceding claims, wherein the respective selection ancillary information comprises an expiry date until the corresponding character should be considered with care.

**7.** The method according to any one of the preceding claims, wherein the respective selection ancillary information comprises a handling classification indicating how the corresponding character is to be used.

**8.** The method according to any one of the preceding claims, wherein the respective selection ancillary information comprises a rationale explaining why the corresponding character is a selected character.

**9.** The method according to any one of the preceding claims, wherein the selected characters are stored and presentable together with the respective selection ancillary information in table form.

**10.** The method according to any one of the preceding claims, wherein the elaborated answer is automatically sent to the user (2, 20).

**11.** A system for an automatic control of a data submission in a forum, the control being based on the respective data content, the system comprising:
- a policies (5, 50) base in which specifically selected characters including selection ancillary information associated with the respective characters can be stored,
- a checker module (4, 40) connected with the policies base (5, 50) which is configured to parse the data content submitted by a user (2, 20) for the forum with respect to the specifically selected characters stored in the policies base (5, 50), to analyze the respective selection ancillary information in case that a selected character is found in the data content, to induce a handling of the data conformable with the analyzed ancillary information and to elaborate an answer for the user (2, 20), the answer including the respective found character together with an appropriate analysis of its selection ancillary information and informing the user (2, 20) about the manner the data is handled, and
- a forum management unit (3, 30) adapted to serve as communication link between the user (2, 20) and the checker module (4, 40).

**12.** The system according to claim 11, wherein the forum management unit (3, 30) is configured to receive the data, to forward the data to the checker module (4, 40) and to send an answer elaborated by the checker module (4, 40) to the user (2, 20) as necessary.

**13.** The system according to claim 11 or 12, wherein the ancillary information comprises metadata and a textual comment associated with the respective character.

**14.** The system according to claim 13, wherein the metadata comprises an expiry date until the corresponding character should be considered with care and/or a handling classification indicating how the corresponding character is to be used.

**15.** The system according to claim 13 or 14, wherein the textual comment comprises a rationale explaining why the corresponding character is a selected character.

**16.** The system according to any one of claims 11 to 15, further comprising a web client tool for submitting data content.

**17.** The system according to any one of claims 11 to 16, wherein the forum management unit (3, 30) is realized as a web server side application for managing and displaying data content.

**18.** A checker module for automatic control of a data submission in a forum, the control being based on the respective data content, the checker module (4, 40) being in contact with a policies base (5, 50) in which specifically selected characters including selection ancillary information associated with the respective characters can be stored, the checker module is configured
- to parse the data content submitted by a user (2, 20) for the forum with respect to the specifically selected characters stored in the policies base (5, 50),
- to analyze the respective selection ancillary information in case that a selected character is found in the data content,
- to induce a handling of the data conformable with the analyzed ancillary information and
- to elaborate an answer for the user (2, 20), the answer including the respective found character together with an appropriate analysis of its selection ancillary information and informing the user (2, 20) about the manner the data is handled.

**19.** The checker module according to claim 18, wherein the checker module (4, 40) is connectable with a forum management unit (3, 30) such that data received by the forum management unit (3, 30) can be forwarded to the checker module (4, 40) and an answer elaborated by the checker module (4, 40) can be sent to the user (2, 20) via the forum management unit (3, 30).

**20.** The checker module according to claim 18 or 19, wherein the checker module includes the policies base (5, 50).

**21.** The checker module according to any one of claims 18 to 20, wherein the checker module (4, 40) can be part of a system according to any one of claims 11 to 17 and/or be employed for carrying out a method according to any one of claims 1 to 10.

**22.** A computer program product with a computer-readable medium and a computer program stored on the computer-readable medium with a program code which is suitable for carrying out a method according to any one of claims 1 to 10 when the computer program is run on a computer.

**23.** A computer program with a program code which is suitable for carrying out a method according to any one of claims 1 to 10 when the computer program is run on a computer.

**24.** A computer-readable medium with a computer program stored thereon, the computer program comprising a program code which is suitable for carrying out a method according to any one of claims 1 to 10 when the computer program is run on a computer.
